# EUROPEAN PATENT SPECIFICATION

(11) **EP 1 424 340 B1**
(45) Date of publication and mention of the grant of the patent: **21.06.2006**
(21) Application number: 02358026.9
(22) Date of filing: 28.11.2002
(51) Int. Cl.: C07F 15/00, H01G 9/20

(54) **Metal complex photosensitizers and photo-electrochemical cell**
Metallkomplexe als Photosensibilatoren und photoelektrochemische Zelle
Complexes métalliques comme photosensibilisants et celulle photoélectrochimique

(43) Date of publication of application: 02.06.2004
(73) Proprietor: IMRA EUROPE S.A., F-06560 Valbonne (FR)
(72) Inventor: Bignozzi, Carlo Alberto, 44100 Ferrara (IT); Contado, Cristiano, 37045 Legnago (Verona) (IT); Biancardo, Matteo, 44100 Ferrara (IT); Altobello, Silvano, 45020 Giacciano con Baruchella (Rovigo) (IT); Larramona, Gerardo, 06560 Valbonne (FR)
(74) Representative: Domange, Maxime

(56) References cited:
- EP-A- 1 231 619
- JP-A- 2001 060 468
- JP-A- 2001 237 000
- US-B1- 6 245 988

## Description

This present invention concerns novel photosensitizer molecules, a new synthesis process to obtain such molecules in high purity, and the use of such photosensitizers in a photo-electrochemical cell.

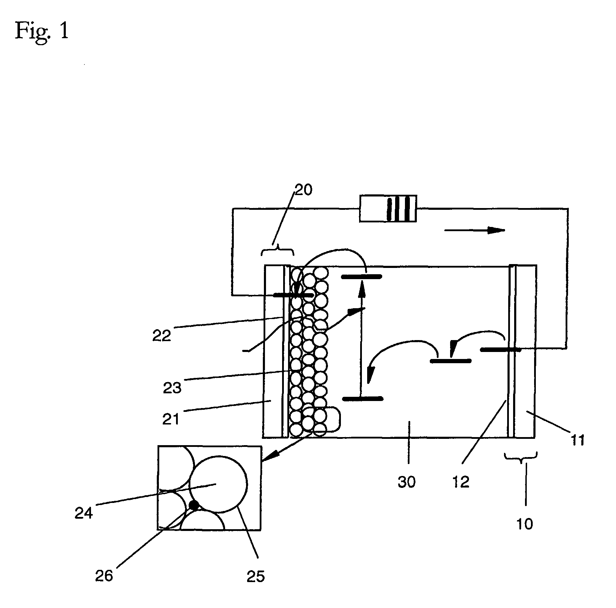

The photo-electrochemical cells known as "dye-sensitized solar cells" are made with an anode photo-electrode consisting in a porous film of a wide band-gap semiconductor metal oxide particles (such as TiO₂), to the surface of which a photosensitizer molecule (or dye) is adsorbed. Such kind of cell is well known and described in [Patent U.S. 5,084,365 (1992), Graetzel et al.]. This photo-electrochemical cell is able to convert light energy such solar radiation into electrical energy. This type of photo-electrochemical cell is explained in the last Example and in Figure 1.

One key component of this photo-electrochemical device is the photosensitizer molecule, which is adsorbed on the semiconductor by means of suitable functional (anchoring) groups. Its role is to harvest the light and give rise to electron injection from the excited state of the dye molecule into the conduction band of the semiconductor substrate. The oxidized dye is regenerated by a redox mediator. Properties of the dye molecules such as thermal and photochemical stability, as well as high light harvesting efficiency over a wide wavelength region, are of fundamental importance for increasing the stability and the photon-to-electron conversion efficiency of this photo-electrochemical device.

Many photosensitizers have been reported to be applicable to such photo-electrochemical device. The main families of photosensitizers are organic dyes, organometallic compounds and transition metal complexes, all containing anchoring groups. At present the best photosensitizers belong to metal polypyridine complexes of ruthenium. The chemistry and photo-physics of polypyridine complexes of transition metals (in particular of ruthenium) have been extensively investigated because of the interesting properties of their excited states [A. Juris et al., Coord. Chem. Rew., 84, 85 (1988); T. J. Meyer, Pure Appl. Chem., 58, 1193 (1986)]. The absorption spectra of such complexes is dominated by intense absorption bands in the visible region, mainly the electronic transitions called "metal-to-ligand charge-transfer" (MLCT).

According to the theoretical analysis on this type of photo-electrochemical cell using a single dye and a metal oxide semiconductor on the photo-anode (such as TiO₂), the maximum power conversion efficiency under standard solar radiation conditions can be obtained when the incident light of wavelengths between 400nm and 900~1000nm, is totally absorbed and converted into electrical energy. This corresponds to a maximum photo-current of about 36mA/cm², obtained from the integration of the international standard solar spectral irradiance AM1.5 over such wavelength range.

Stability of this type of photo-electrochemical cell under different conditions is currently under investigation and, hence, very few data are published. Stability of such devices depends on the stability of several of their components, such as the dye, electrolyte, etc, as well as the interaction among the different components during both the operation and the stand-by of the device, and the sealing. Stability towards different factors such as temperature range, continuous irradiation, ultraviolet radiation, ambient humidity, etc, have to be checked for each specific application and targeted durability period. In particular, the stability of the dye molecule is of great concern. Typically, solutions of photosensitizers are, in many cases, not photochemically stable when constantly irradiated under visible light. The oxidized state of the dye is usually not stable either. Photo-electrochemical cells made with such molecules are much more stable because of the fact that the excited state injects very quickly an electron into the photo-electrode metal oxide (in the order of picoseconds), and because the intermediate oxidized state is quickly regenerated by the redox mediator (I₂/I). As far as the photosensitizer is concerned, the stability of the device is partially due to a kinetic balance between the degradation reactions that may suffer the intermediate dye states, and the regeneration reaction to the dye ground state; thermal and chemical stability of the dye interacting with the other cell components has also to be considered.

Many molecules have been claimed to act as photosensitizers for such devices, but only very few of them show a significant efficiency. The difficulty to obtain an efficient photosensitizer is due to the fact that the molecule has to fulfil several requirements at the same time, such as:
- thermal and photochemical stability,
- a high light harvesting i.e. a large extinction coefficient over a wide wavelength range, and
- adequate ground state and excited state energetic levels and therefore an adequate redox potential,
- a high injection efficiency, i.e. fast injection rate and low back reaction rate, but also
- a good anchoring to the photo electrode metal oxide and large coverage of the photo-electrode metal oxide over one monolayer.

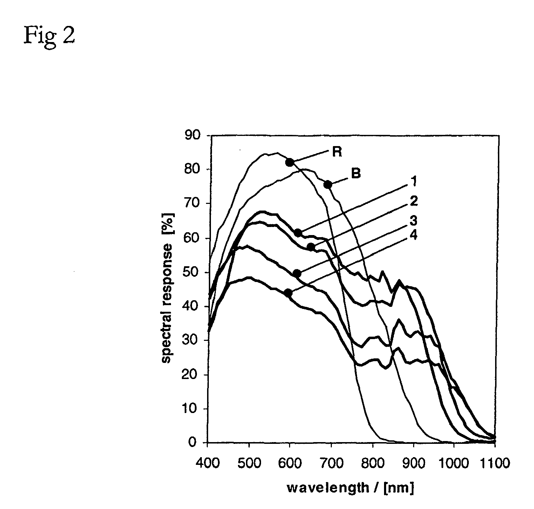

At present, two photosensitizers have been reported to give the best performance, which consist on ruthenium complexes with polypyridine and NCS ligands: The so-called "Red dye" cis-di(thiocyanato)-bis(4,4'-dicarboxylic-2,2'-bipyridyl)-ruthenium(II), or Ru(dcbpy)₂NCS)₂ in Patent WO 94/04497, and the so-called "Black dye" tris(thiocyanato)(4,4',4"-tricarboxylic-2,2':6',2"-terpyridyl)-ruthenium(II), abbreviated as Ru(tcterpy)(NCS)₃, in Patent US 6,245,988 B1. The spectral responses (also known as IPCE) of photo-electrochemical cells made with such dyes have the onset in the near-infrared region: 800nm for the red dye and 900nm for the black dye (see Figure 2). The integrated photo-currents (calculated by integration of the product of the spectral response and the standard solar spectrum AM1.5) are typically about 10-16 mA/cm² for the red dye, and about 15-20 mA/cm² for the black dye, depending on the design of the TiO₂ photo-electrode and the choice of the electrolyte.

For some applications of such photo-electrochemical cells this performance is considered insufficient; one of the reasons of such medium performance is the fact that such dyes have an absorption spectra which do not allow to significantly harvest the solar radiation in the near-infrared region between 800 and 1000nm.

There are several causes of cell degradation, but dye degradation is one important cause. It is mostly agreed that the photo-electrochemical cells made with the red dye show an insufficient stability under high temperature conditions, in particular above 60°C. Besides, from the analysis performed by the inventors, the stability of cells made with black dye appears to be lower than with Red dye and there is dye degradation.

At present, the better compromise of performance and stability with such devices is obtained with the so-called red dye. Up to now, however, the efforts to improve the present photosensitizers have been focused mainly on increasing the performance rather than the stability. Lack of stability of the "Red dye" and "Black dye" have been recently explained as a loss of NCS ancillary ligand due to the easiness to be oxidized [F. Cecchet et al. J. Phys. Chem. B 2002, 106, 3926 ], following the interpretation of cyclic voltammetric plots of dye solutions in coordinating solvents (such methanol or acetonitrile).

Attempts have been reported to obtain metal complexes without any NCS or NC ancillary ligands, either by avoiding any monodentate ligand (polydentate ligands are more strongly bound to the metal centre due to the chelate effect), or by using ancillary ligands such halogens, which are less easy to be oxidized than NCS. Several complexes with general formula MLL' or MYY'Y" (where M is Ru or Os, L tridentate ligands, and Y bidentate ligands) have been reported. However, their spectral response is much lower than the red dye. On the other hand, metal polypyridine complexes containing Cl or I as ancillary ligand have been reported, but their spectral response was much lower than red dye [Nazeeruddin et al., J. Am. Chem. Soc., 1993, 115, 6382], or were even not active as photosensitizers [Nazeeruddin et al., J. Chem. Soc. Dalton Trans., 1997, 4571]. The reason of this bad performance is that such halogen ligands donate charge to the metal through both the σ and π bonds as the halogen ligand have σ and π donating character contrary to the usual NCS and CN ligands which have σ donating and π accepting character. As a consequence metal complexes with such halogen ligands appear to provide a too low redox potential for a use as photosensitizer in a photochemical cell.

In order to obtain more efficient photosensitizers, there have been several approaches to increase the light harvesting by designing some Ru complexes similar to "Black dye" (terpyridyl derivative ligand) in which only two among the three NCS ancillary ligands were changed by one chromophoric bidentate ligand; for example, in [Patent US 6,245,988 B1] the bidentate ligands were 2,2'-bipyridil or o-phenantroline C₁₋₃₀ alkyl derivatives, and in [A. Islam et al., New J. Chem. 2002, 26, 966; H. Arakawa et al., Proceedings ECS 201 Meeting, 2002] they were β-diketonate derivatives (such as acetylacetonate). However, such dyes do not show better spectral responses than red or black dyes, and, in addition, all of these dyes still contain one NCS or CN ancillary ligand, keeping, then, a source of instability.

Another approach to extend light harvesting has been made with a few Os complexes. According to a theory on Os(II) polypyridyl complexes [T. J. Meyer, Pure Appl. Chem., 58, 1193 (1986)], their absorption spectra may expand the red or near-infrared region (compared to the ruthenium complexes) because they can show a new absorption band in such region corresponding to spin-forbidden transitions to the triplet states (³MLCT); this band may appear because the spin-orbital coupling constant (λₛₒ) for osmium (ca. 3000 cm-1) is significantly high, while for ruthenium (ca. 1100 cm-1) is rather low. We have synthesized the complexes Os(tcterpy)₂ and Os(tcterpy)(NCS)₃, and, although their absorption spectra is broad, they do not show a significant spectral response when used as photosensitizers, either because the low redox level or because to other reasons like slow injection rate. Also, in the above mentioned Patent US 6,245,988 B1 they reported several osmium complexes with terpyridyl derivative ligands, but they did not show a spectral response better than red dye, if any; in addition, all of them contain NCS or NC as ancillary ligand.

The present invention aims to find new dye metal complexes which can be used as photosensitizers in the above-described photo-electrochemical cells showing a similar or better spectral response than the "Red dye" in the 750-1000 mm range, but without containing any NCS nor NC groups which are a cause of cell instability, in particular, at high temperatures. More particularly, the present invention aims to find photosensitizers which can show a spectral response of the photo-electrochemical cells extended to the near infrared region up to 1000nm.

In addition to these above main problems, another important difficulty found with the present best photosensitizers is their synthesis process and the purity of the obtained molecules. It is known among the researchers in this field that the synthesis of photosensitizers such as the red and black dye produces by-products and some impurities (some yet unknown), which affect significantly the performance of the molecule when used as photosensitizer in such photo-electrochemical cells. The present synthesis process of Black dye is based in a reaction of RuCl₃ with the terpyridyl derivative ligand (tcterpy) in dimethyl-formamide (DMF) solvent, in order to first obtain the intermediate complex Ru(tcterpy)Cl₃. The inventors have replicated such known synthesis process and they have found several by-products, such complexes in which the solvent DMF is coordinated to ruthenium, and also some percentage of the complex Ru(tcterpy)₂. These by-products originate more by-products in the following steps of the reaction, some of which are difficult to separate and make decrease the efficiency of the photosensitizer.

Therefore, another goal of the present invention is to find photosensitizers and a new synthesis process for such photosensitizers that allow obtaining such molecules in a very high purity, which is necessary to obtain a synthesizing good efficiency in the photo-electrochemical cells.

To solve all of these problems, the present invention provides a photosensitizer metal complex of the formula MLYX, in which:
- M is ruthenium or osmium,
- Y is a tridentate ligand of the type 2,2':6',2"-terpyridyl derivative substituted by only one anchoring group, in the 4,4',4" positions, said anchoring acid group being an acid group present in the acidic form or anionic form balanced by a cation, preferably a carboxylic, phosphonic or boronic group,
- L is a substituted or unsubstituted bidentate ligand of the type 2-(2'-pyridyl)-quinoline or the type 2,2'-bipyridyl, preferably substituted in the 4,4' positions by a carboxylic group present as acid or as anion balanced with a cation, or a C₁₋₃₀ alkyl group, and
- X is a halogen, preferably Cl or, I.

More particularly, the present invention provides a photosensitizer metal complex having the formula Ia, 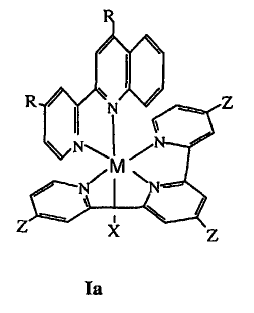 in which :
- M is ruthenium or osmium,
- Z is the said anchoring group such as carboxylic, phosphonic or boronic group, present in the acidic or anionic form balanced by a cation,
- R is H, a carboxylic group as acid or as anion balanced with a cation, or a C₁₋₃₀ alkyl group, and
- X is an halogen preferably Cl or 1.

More particularly also, the present invention provides a photosensitizer metal complex of the formula Ib, 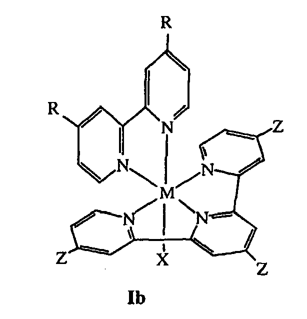 in which:
- M is ruthenium or osmium,
- Z is the said anchoring group such as carboxylic, phosphonic or boronic, present in the acidic form or anionic form balanced by a cation,
- R is H, a carboxylic group as acid or as anion balanced with a cation, or a C₁₋₃₀ alkyl group, and
- X is a halogen preferably Cl or I.

Preferably in the above formula Ia et Ib, the tridentate ligand L is a 2,2':6',2"-terpyridyl derivative substituted in the 4,4',4" positions by Z, which is an anchoring group such as carboxylic, phosphonic or boronic group and, more in particular, the carboxylic group (COOH). The anchoring group Z can be in the form of an acid group or a salt with an anionic group balanced by inorganic cations, such as alkaline, earth-alkaline or others mineral cations, or organic cations, such as alkylammonium, imidazolium or others.

More particularly in the above formula Ia and Ib, Z is the carboxylic group (COOH), present in the acidic form or anionic form balanced by a cation.

In the bidentate ligand Y of formula Ia, which is a chromophoric ligand of the type 2-(2'-pyridyl)-quinoline, and that of formula Ib, which is of the type 2,2'-bipyridyl, the group R is also preferably the carboxylic group (COOH), present in the acidic form or anionic form balanced by a cation.

These complexes of formula Ia and Ib have usually charge (+1); therefore, a counter-anion is needed to obtain charge equilibration. This anion can be chosen from any known anion, which should not affect the properties of the molecule as photosensitizer. The choice should be oriented by criteria based on the easiness to obtain the pure molecule, the solubility of the molecule in organic solvents used in the process of dye adsorption on the photoanodes of the photo-electrochemical cell (such as acetonitrile, ethanol and others) and the side-effect of such anion during such process. Examples of anions can be perchlorate, hexafluorophosphate, tetrafluroborate, triflate and others. It is also possible to obtained such photosensitizers as neutral or anionic form by neutralizing the acidic anchoring groups Z of the tridentate ligand and/or the carboxilic derivatives of the bidentate ligands, balanced with the necessary amount of counter-cations, chosen among known inorganic cations (such as alkaline metal ions) or organic cations (such as alkylammonium, imidazolium,...).

Another object of the present invention is a process for synthesising photosensitizer of the present invention comprising the following steps:
1°) reacting a metal M precursor, such as (TBA)₂Os(Cl)₆ or Ru(Cl)₃, with a stoichiometric amount of the tridentate ligand L to form the corresponding MLCl₃ complex, using a high boiling point non-coordinating solvent preferably an alcohol such as n-butanol; and
2°) reacting the MLCl₃ complex with a bidentate Y ligand, and
3°) if necessary, substituting by a thermal substitution reaction the chloride from the MLYCl complex by another halogen.

The proposed solution of this invention concerning the problem of previous synthesis process has consisted mainly in using a high boiling point solvent which is non-coordinating such as n-butanol and finding that in this solvent, the metal M precursors, such as (TBA)₂Os(Cl)₆ or Ru(Cl)₃, react with a stoichiometric amount of the tridentate ligand L to form the corresponding MLCl₃ complexes, without any formation of other solvent-coordinating species nor formation of other complexes such as ML₂. This is followed by a second reaction step by adding the bidentate Y ligand involving substitution of two Cl ligands and coordination by one bidentate Y ligand by substitution reaction. The iodide derivative (X=I) or other halogen derivative of the complexes are prepared by thermal substitution reactions from the corresponding chloride containing complexes (X=Cl).

Another object of the present invention is a photo-electrochemical cell, comprising an anode electrode having a film of metal oxide semiconductor particles which have been deposited and sintered on a transparent substrate, a photosensitizer that is adsorbed on the surface of said metal oxide particles, a cathode electrode, and an electrolyte that is filling the space between the said anode electrode and cathode electrode, characterized in that the photosensitizer is a photosensitizer according to the present invention.

The metal complexes of this invention, when used as photosensitizers in the photo-electrochemical cells above described, they all show a panchromatic spectral response which can compete with that of red dye, and this without containing any CN or SCN ligand, hence, with an increased dye stability. The stability of the dye oxidized state was confirmed by the appearance of reversible cyclic voltammograms obtained with dye solutions in coordinating solvents such as methanol.

In particular, the osmium complexes of this invention all show a spectral response of 25% to 50% at 900 nm, beating any known photosensitizer in such a wavelength region (see Figure 2). The integrated photo-current were between 13 and 20 mA/cm², competing or even being higher than the red dye. This important extension towards the near-infrared regions was possible thanks to the presence in their absorption spectra of an absorption band at 800-900 nm with a significant absorption extinction coefficient of more than 1000 M⁻¹ cm⁻¹, which was not reported before for such a kind of metal complexes. This is clearly shown in Table I of the hereinafter example 9, where dyes of this invention are compared to some others (reported by others or synthesized by the inventors).

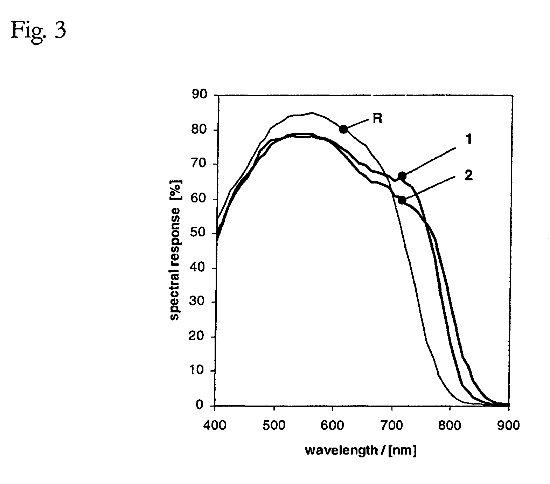

The ruthenium complexes of this invention show a wide spectral response extended up to more than 800 nm, and superior to that of red dye (integrated photo-currents higher than as shown in table 2 of example 9). This is the first time to obtain such a high spectral response with a ruthenium complex which does not contain any CN or SCN ligand (see Figure 3), hence, with an increased dye stability. The stability of the dye oxidized state was confirmed by the appearance of reversible cyclic voltammograms obtained with dye solutions in coordinating solvents such as methanol.

It is believed that the unique tridentate L ligand provides a metal complex with increase of the light extension coefficient and an absorption spectrum in the visible as good as "the red dye".

The bidentate ligand Y increases the thermal stability of the complex, thanks to the chelate effect, and the molar extinction coefficient. Changes at the substituent R allows to tune the redox level of the molecule.

On the other hand, although halogen ligands, are known to donate charge to the metal of the complexes through σ and π bonds and, therefore have the risk to produce a too low redox potential for the use as photosensitizer; it has been found according to the present invention that the combination of this halogen ligand with a bidentate ligand provides a good compensation between the electronic effect of the bidentate ligands Y, which tend to withdraw charge from the metal centre, and the halogen, which donates charge, allowing, thus, to keep the dye redox level high enough to be adequate for the photo-electrochemical cells application described here using the typical iodine/iodide redox mediators. Furthermore, it is likely that such halogen ligand involves a shift of the absorption spectrum towards the near infrared by changing the ancillary ligands from π accepting to π donating ligands.

The substitution of the NCS ligand, by a combination of the bidentate ligand L and an ancillary halogen ligand X, appears to be the solution to obtain both high harvesting performance and stability and more particularly to increase stability of the dye.

Other characteristics and advantages of the present invention will appear in the following examples referring to figures 1 to 3.

Fig.1 is the drawing that explains the structure and the principle of the photo-electrochemical cell. In figure 1, the following references have the following meanings:
10: Cathode electrode
11: Glass
12: Transparent conductive layer
20: Anode electrode
21: Glass
22: Transparent conductive layer
23: TiO₂ layer (film)
24: TiO₂ particle
25: Photosensitizer (or dye)
26: Pore between TiO₂ particles
30: Electrolyte

Fig. 2 is the spectral response of photo-electrochemical cells made with some Os complexes of the examples and compared to that of red and black dye. In figure 2 the following references have the following meanings:
1: [Os(H₃tcterpy)(dcbpy)Cl] (example 2)
2: [Os(H₃tcterpy)(bpyq)Cl] (example 1)
3: [Os(H₃tcterpy)(bpy)CI] (example 4)
4: [Os(H₃tcterpy)(dmbpy)CI] (example 3)
R: [Ru(dcbpy)₂(NCS)₂] red dye
B: [Ru(tcterpy)(NCS)₃] black dye

Fig. 3 is the spectral response of photo-electrochemical cells made with some Ru complexes of the examples and compared to that of red dye. In figure 3 the following references have the following meanings:
1: [Ru(H₃tcterpy)(bpyq)Cl] (example 6)
2: [Ru(H₃tcterpy)(tbbpy)Cl] (example 7)
R: [Ru(dcbpy)₂(NCS)₂] red dye

The following are preferable examples of this invention.

### Example 1: Preparation of the complex [Os^{II}(H₃tcterpy)(bpycq)(Cl)](PF₆), where (H₃tcterpy) is 4,4',4"-tricarboxylic-2,2':6',2"-terpyridyl and (bpyq) is 2-(2'-pyridyl)quinoline

a) The (H₃tcterpy) ligand was prepared according to the literature procedures [Nazeeruddin et al., J. Am. Chem. Soc. 2001, 123, 1613]
b) The (bpyq) ligand was prepared as reported by [C. M. Harris et al, Aust. J. Chem. 1972, 25, 1631]
c) The intermediate complex (TBA)₂Os(Cl)₆ (where TBA means tetrabutylammonium (+1) cation) was prepared from commercial (NH₄)₂[Os(Cl)₆]_{'} which was converted into the corresponding TBA salt by precipitation with TBACl from an aqueous solution. The solid product was filtered and dried under vacuum. The (TBA)₂[Os(Cl)₆] salt was reacted in n-butanol with a stoichiometric amount of (H₃tcterpy) at reflux for 7h. A solution of [Os^{II}(H₃tcterpy)(Cl)₃](TBA) in n-butanol was obtained.
d) The solution [Os^{II}(H₃tcterpy)(Cl)₃](TBA) in n-butanol prepared before was reacted with a stoichiometric amount of (bpyq) for 25h at reflux. The solution was rotary evaporated to dryness. The solid was then dissolved in water at pH 12 by addition of TBAOH and re-precipitated at pH 2 by addition of HPF₆. The precipitate was filtered, washed with dichloromethane and dried. The complex was further purified on Sephadex LH 20 column by using water at pH 7 as eluant and re-precipitated at pH 2 with HPF₆.

H-NMR of the anionic complex [Os(tcterpy)(bpyq)CI](TBA)₂ (300 MHz, CD₃OD) δ ppm: 6.88 (1H, d,H^{7a}), 7.25 (1H,t,H^{8a}), 7.44 (1H, t,H^{9a}), 7.6 (2H, d,H^{5,5"}), 7.66 (2H, d,H^{6,6"}), 7.78 (1H, d,H^{10a}), 7.96 (1H, t,H^{3a}), 8.17 (2H, m,H^{4a,5a}), 8.67 (1H, dH^{6a}) 8.98 (2H, s,H^{3,3"}), 9.12 (1H, d,H^{2a}), 9.2 (2H, s,H^{3',5'}), 10.26 (1H, d,H^{1a}).

Elemental analysis of [Os^{II}(H₃tcterpy)(bpyq)(Cl)](PF₆), OsC₃₂N₅H₂₁O₆ClPF₆: calculated: C=40.79%, N=7.43%, H=2.25%; found: C=40.35%, N=7.13%, H=2.40%

Cyclic voltammetry (glassy carbon working electrode, Pt counter electrode, SCE reference electrode, methanol solvent, 0.1M TBAPF₆ inert electrolyte) showed peaks at-1.1 V and -1.24 V versus SCE, corresponding to irreversible reduction of ligands, and reversible peak with E_{1/2} at 0.65 V versus SCE, corresponding to the Os^{II}/Os^{III} transition.

UV-vis-NIR spectroscopy from 200 to 1100nm (ethanolic solutions) gives absorption peaks at 270, 290, 325, 380, 450, 530, 630 and 830 nm with extinction coefficients higher than 1000 M⁻¹cm⁻¹.

### Example 2: Preparation of the complex [Os^{II}(H₃tcterpy)(H₂dcbpy)(Cl)](PF₆), where (H₃tcterpy) is 4,4',4"-tricarboxylic-2,2':6',2"-terpyridyl and (H₂dcbpy) is 4,4'-dicarboxylic-(2,2'-bipyridyl)

a) The ligand (H₂dcbpy) was either commercial or prepared by oxidizing 4,4'-dimethyl-(2,2'-bipyridyl) with dichromate in H₂SO₄
b) The solution [Os^{II}(H₃tcterpy)(CI)_{3]}(TBA) in n-butanol prepared as in Example 1c) was reacted with a stoichiometric amount of (H₂dcbpy) for 10 h at reflux. The solution was rotary evaporated to dryness. The solid was then dissolved in water at pH 12 by addition of NaOH and reprecipitated at pH 2 by addition of HPF₆. The precipitate was filtered, washed with dichloromethane and dried. The complex was further purified on Sephadex LH 20 column by using water at pH 7 as eluant and reprecipitated at pH 2 with HPF₆.

H-NMR of the anionic complex [Os(tcterpy)(dcbpy)Cl] (TBA)₄ (300 MHz, D₂O) δ ppm: 1.02 (48H, t,CH₃), 1.2 (32H, m, CH₂), 1.33 (32H, m, CH₂), 3.15 (32H, m, CH₂), 7.24 (1H, d,H^{5a}), 7.33 (1H, d, H^{2a}), 7.6 (2H, d,H^{5,5"}), 7.66 (2H, d, H^{6,6"}), 8.27 (1H, d, H^{6a}), 8.83 (1H, s, H^{3a}), 8,9 (2H, s, H^{3,3"}), 9.06 (2H, s, H^{3',5'}), 9.2 (1H, s, H^{4a}), 10.12 (1H, d, H^{1a})

Elemental analysis of [Os^{II}(H₃tcterpy)(H₂dcbpy)(Cl)](PF₆), OsC₃₀N₅H₁₉O₁₀ClPF₆: calculated: C=36.76%, N=7.14%, H=1.95%; found: C=37.86%; N=7.54%, H=2.20%.

Cyclic voltammetry (glassy carbon working electrode, Pt counter electrode, SCE reference electrode, methanol solvent, 0.1M TBAPF₆ inert electrolyte) showed peak at-1.3 V versus SCE, corresponding to irreversible reduction of ligand, and reversible peak with E_{1/2} at 0.67 V versus SCE, corresponding to the Os^{II}/Os^{III} transition.

UV-vis-NIR spectroscopy from 200 to 1100nm (ethanolic solutions) gives absorption peaks at 290, 315, 340, 385, 480, 530, 635 and 820 nm with extinction coefficients higher than 2000 M⁻¹cm⁻¹.

### Example 3: Preparation of the complex [Os^{II}(H₃tcterpy)(dmbpy)(Cl)](PF₆), where (H₃tcterpy) is 4,4',4"-tricarboxylic-2,2':6',2"-terpyridyl and (dmbpy) is 4,4'-dimethyl-(2,2'-bipyridyl)

a) The ligand (dmbpy) is either commercial or prepared as reported by [Sprintshnik et al, J. Am. Chem. Soc. 1977, 99, 4947]
b) A solution of [Os^{II}(H₃tcterpy)(Cl)₃](TBA) in n-butanol prepared as in Example 1c) was reacted with a stoichiometric amount of (dmbpy) for 29 h at reflux. The solution was rotary evaporated to dryness. The solid was then dissolved in water at pH 12 by addition of NaOH and reprecipitated at pH 2 by addition of HPF₆. The precipitate was filtered, washed with dichloromethane to remove the excess of TBAPF₆ and dried. The complex was further purified on Sephadex LH 20 column by using water at pH 7 as eluant and reprecipitated at pH 2 with HPF₆.

H-NMR of the anionic complex [Os(tcterpy)(dmbpy)Cl](TBA)₂ (300 MHz, D₂O) δ ppm: 0.8 (24H t,CH₃), 1.2 (16H, m,CH₂), 1.44 (16H, m,CH₂₎, 2.2 (3H, s,CH₃), 2.8 (3H, s,CH₃), 3.05 (16H, t, CH₃), 6.48 (1H, d,H^{5a}), 6.75 (1H, d,H^{2a}), 7.39 (2H, d,H^{5,5"}), 7.56 (1H, d,H^{6,6"}), 7.65 (1H, d,H^{6a}), 7.98 (1H, s,H⁴) 8.45 (1H,s,H^{3a}), 8.62 (2H, s,H^{3,3''}), 8.73 (2H, s,H^{3',5'}), 9.48 (1H, d,H^{1a}).

Elemental analysis of [Os(H₃tcterpy)(dmbpy)Cl](PF₆), OsC₃₀N₅H₂₃O₆ClPF₆, P.M.=920.18: calculated: C=39.16%, N=7.61%, H=2.52%; found: C=39.83%, N=8.18%, H=2.42%.

Cyclic voltammetry (glassy carbon working electrode, Pt counter electrode, SCE reference electrode, methanol solvent, 0.1M TBAPF₆, inert electrolyte) showed peaks at-1.26 V and - 1.42 V versus SCE, corresponding to irreversible reduction of ligands, and reversible peak with E_{1/2} at 0.55 V versus SCE, corresponding to the Os^{II}/Os^{III} transition.

UV-vis-NIR spectroscopy from 200 to 1100nm (ethanolic solutions) gives absorption peaks at 245, 290, 340, 395, 480, 550, 650 and 880 nm with extinction coefficients higher than 2000 M⁻¹cm⁻¹.

### Example 4: Preparation of the complex [Os^{II}(H₃tcterpy)(bpy)(Cl)](PF₆), where (H₃tcterpy) is 4,4',4"-tricarboxylic-2,2':6',2"-terpyridyl and (bpy) is (2,2'-bipyridyl)

The solution [Os^{II}(H₃tcterpy)(Cl)₃](TBA) in n-butanol prepared as in Example 1c) was reacted with a stoichiometric amount of commercial (bpy) for 35 h at reflux. The solution was rotary evaporated to dryness. The solid was then dissolved in water at pH 12 by addition of TBAOH and reprecipitated at pH 2 by addition of HPF₆. The precipitate was filtered, washed with dichloromethane and dried. The complex was further purified on Sephadex LH 20 column by using water at pH 7 as eluant and reprecipitated at pH 2 with HPF₆.

H-NMR of the anionic complex [Os(tcterpy)(bpy)Cl](TBA)₂ (300 MHz, D₂O) δ ppm: 1.02 (48H, t,CH₃), 1.2 (32H, m,CH₂, 1.33 (32H, m, CH₂), 3.15 (32H,m,CH₂), 7.24 (1H, d,H^{5a}), 7.33 (1H, d,H^{2a}), 7.6 (2H, d,H^{5,5"}), 7.66 (2H, d,H^{6,6"}), 8.27 (1H, d,H^{6a}), 8.83 (1H, s,H^{3a}), 8.9 (2H, s,H^{3,3''}), 9.06 (2H, s,H^{3',5'}), 9.2 (1H, s,H^{4a}), 10.12 (1H, d,H^{1a}).

Elemental analysis of [Os(H₃tcterpy)(bpy)Cl](PF₆), OsC₂₈N₅H₁₉O₆ClPF₆, P.M.=892.12: calculated: C=37.69%, N=7.8%, H=2.14%; found: C=36.8 %, N=7.3 %, H=1.9 %.

Cyclic voltammetry (glassy carbon working electrode, Pt counter electrode, SCE reference electrode, methanol solvent, 0.1M TBAPF₆ inert electrolyte) showed peak at -1.27 V versus SCE, corresponding to irreversible reduction of ligands, and reversible peak with E_{1/2} at 0.61 V versus SCE, corresponding to the Os^{II}/Os^{III} transition.

UV-vis-NIR spectroscopy from 200 to 1100nm (ethanolic solutions) gives absorption peaks at 245, 290, 340, 390, 480, 540, 650 and 880 nm with extinction coefficients higher than 1000 M⁻¹cm⁻¹.

### Example 5: Preparation of the complex [Os^{II}(H₃tcterpy)(tbbpy)(Cl)](PF₆), where (H₃tcterpy) is 4,4',4"-tricarboxylic-2,2':6',2"-terpyridyl and (tbbpy) is 4-4'-di-tert butyl-(2,2'-bipyridyl)

The solution [Os^{II}(H₃tcterpy)(Cl)₃](TBA) in n-butanol prepared as in Example 1c) was reacted with a stoichiometric amount of commercial (tbbpy) for 23h at reflux. The solution was rotary evaporated to dryness. The solid was then dissolved in water at pH 12 by addition of TBAOH and reprecipitated at pH 2 by addition of HPF₆. The precipitate was filtered, washed with dichloromethane and dried. The complex was further purified on Sephadex LH 20 column by using water at pH 7 as eluant and reprecipitated at pH 2 with HPF₆.

H-NMR f the anionic complex [Os(tcterpy) (tbpy)Cl] (TBA)₂ (300 MHz, D₂O) δ ppm: 0.9 (24H, t, CH₃), 1.02 (9H, s, H^{B}), 1.2 (16H, m,CH₂), 1.43 (16H, m, CH₂), 1.43 (9H, m, H^{A}), 3.05 (16H, t, CH₂), 6.67 (1H, d,H^{5a}), 6.83 (1H, d,H^{2a}), 7.38 (2H, ,H^{5,5"}), 7.52 (2H, ,H^{6,6"}) 7.87 (1H, d,H^{6a}) 8.05 (1H, s,H^{3a}), 8.44 (1H, s,H^{4a}) 8.61 (2H, s,H^{3,3"}), 8.73 (2H, s,H^{3',5'}), 9.55 (1H, d,H^{1a}).

Elemental analysis of [Os(H₃tcterpy)(tbbpy)Cl](PF₆), OsC₃₆N₅H₃₅O₆ClPF₆, P.M.=1004.17: calculated: C=43.05%, N=6.97%, H=3.5%; found: C=40.2%, N=6.52 %, H=3.57%.

Cyclic voltammetry (glassy carbon working electrode, Pt counter electrode, SCE reference electrode, methanol solvent, 0.1M TBAPF₆ inert electrolyte) showed peak at-1.32 V versus SCE, corresponding to irreversible reduction of ligands, and reversible peak with E_{1/2} at 0.55 V versus SCE, corresponding to the Os^{II/}Os^{III} transition.

UV-vis-NIR spectroscopy from 200 to 1100nm (ethanolic solutions) gives absorption peaks at 290, 340, 390, 470, 535, 640 and 870 nm with extinction coefficients higher than 1500 M⁻¹cm⁻¹.

### Example 6: Preparation of the complex [Ru^{II}(H₃tcterpy)(bpyq)(Cl)](PF₆), where (H₃tcterpy) is 4,4',4"-tricarboxylic-2,2':6',2"-terpyridyl and (bpyq) is 2-(2'-pyridyl)quinoline

a) The ligand (H₃tcterpy) was prepared as an Example 1a)
b) The (bpyq) ligand was prepared as in Example 1b)
c) The RuCl₃ 3H₂O salt was reacted in n-butanol with a stoichiometric amount of (H₃tcterpy) at reflux for 6h. A solution of the intermediate [Ru^{II}(H₃tcterpy)(Cl)₃] complex in n-butanol was obtained.
d) The solution of [Ru^{II}(H₃tcterpy)(Cl)₃] in n-butanol obtained before was reacted with a stoichiometric amount of (bpyq) for 8h at reflux. The solution was rotary evaporated to dryness, obtaining the chloride salt of the complex. The solid was then dissolved in water and re-precipitated at pH 2 by addition of HPF₆ and dried. The product was purified on Sephadex LH 20 column by using ethanol as eluant. Alternatively, after addition of HPF₆, the product was re-dissolved in an aqueous solution of TBAOH at pH 10, then the pH was adjusted to pH 8 and the solution was passed through a Sephadex LH 20 column by using aqueous solution of TBAOH at pH 8 as eluant; the fraction containing the complex was then precipitated at pH 2, filtered, dried and washed with dichloromethane.

H-NMR of [Ru(H₃tcterpy)(bpyq)Cl](PF₆) (400 MHz CD₃OD) δ ppm: 7 (1H, d, H^{7a}), 7.25 (1H, t, H^{8a}), 7.45 (1H, t, H^{9a}), 7.8 (2H, d, H^{5,5"}), 7.88 (2H, d, H^{6.6"}), 8.05 (1H, d, H^{10a}), 8.4 (1H, t, H^{3a}), 8.5 (2H, m, H^{4a,5a}), 8.7 (1H, d, H^{6a}), 9 (2H, s, H^{3,3"}), 9.1 (1H,d, H^{2a}), 9.28 (2H, s,H^{3',5'}), 10.65 (1H, d, H^{1a}).

Cyclic voltammetry (glassy carbon working electrode, Pt counter electrode, SCE reference electrode, methanol solvent, 0.1M TBAPF₆ inert electrolyte) showed a reversible peak with E_{1/2} at 0.98 Vs SCE, corresponding to the Ru^{II}/Ru^{III} transition.

UV-vis-NIR spectroscopy from 200 to 1100nm (ethanolic solutions) gives absorption peaks at 340, 390, 525 and 680 nm with extinction coefficients higher than 1500 M⁻¹cm⁻¹.

### Example 7: Preparation of the complex (Ru^{II}(H₃tcterpy)(tbbpy)(Cl)](PF₆), where (H₃tcterpy) is 4,4',4"-tricarboxylic-2,2':6',2"-terpyridyl and (tbbpy) is 4-4'-di-tert-butyl-(2,2'-bipyridyl)

The solution of [Ru^{II}(H₃tcterpy)(Cl)₃] in n-butanol prepared as in Example 6c) was reacted with a stoichiometric amount of commercial (tbbpy) for 8h at reflux. The solution was rotary evaporated to dryness. The solid was then dissolved in water and re-precipitated at pH 2 by addition of HPF₆, and dried. The product was purified on Sephadex LH 20 column by using ethanol as eluant. Alternatively, after addition of HPF₆, the product was re-dissolved in an aqueous solution of TBAOH at pH 10, then the pH was adjusted to pH 8 and the solution was passed through a Sephadex LH 20 column by using aqueous solution of TBAOH at pH 8 as eluant; the fraction containing the complex was then precipitated at pH 2, filtered, dried and washed with dichloromethane.

H-NMR of [Ru(H₃tcterpy)(tbbpy)Cl](PF₆) (400 MHz, CD₃OD) δ ppm: 1.3 (9H, s, H^{B}), 1.6 (9H,s, H^{A}), 5.9 (1H, d, H^{5a}), 5.95 (1H, d, H^{2a}), 6.55 (4H, m, H^{5,6,5",6"}), 6.75 (1H, d, H^{6a}), 7.07 (1H, s, H^{3a}) 7.32 (1H, s, H^{4a}), 7.48 (2H, s, H^{3,3"}), 7.6 (2H, s, H^{3',5'}), 8.28 (1H, d, H^{1a}).

Cyclic voltammetry (glassy carbon working electrode, Pt counter electrode, SCE reference electrode, methanol solvent, 0.1M TBAPF₆ inert electrolyte) showed peak at -1.33 V versus SCE, corresponding to irreversible reduction of ligand, and reversible peak with E_{1/2} at 0.88 V versus SCE, corresponding to the Ru^{II}/Ru^{III} transition.

UV-vis-NIR spectroscopy from 200 to 1100nm (ethanolic solutions) gives absorption peaks at 340, 405, 510 and 680 nm with extinction coefficients higher than 1500 M⁻¹cm⁻¹.

### Example 8: Preparation of a photo-electrochemical cell using such photosensitizers

This is the explanation about the fabrication method of a photo-electrochemical cell in which the photosensitizer will be used. The anode electrode was composed by TiO₂ particles produced by an autoclave method similar to those described in [Barbé et al., J. Am. Ceram. Soc., (1997), 80, 3157], obtained as an aqueous sol of nanocrystal particle size. The TiO₂ film was deposited on a transparent conductive oxide (TCO) glass (for example, from Nippon Sheet Glass having a resistance of 10Ω/square) by using a doctor blade method with the TiO₂ sol. After drying the film at room temperature, the electrode was sintered at 450°C for 20 minutes, and, as a result, a porous TiO2 film with about 18 µm thickness was obtained.

The TiO₂ was then soaked in an ethanol solution of 5·10⁻⁴ M of the photosensitizer during 24 hours, similarly as described in [Nazeeruddin et al., J. Am. Chem. Soc., (1993), 115, 6382]. Then, the dye is attached on the surface of the TiO₂ film, and the electrode is taken out from the solution under a stream of dry nitrogen. The photo-electrochemical cell is finished by addition of a counter-electrode consisting in another transparent conductive oxide (TCO) glass on which a Pt catalyst has been deposited [Nazeeruddin et al., J. Am. Chem. Soc., (1993), 115, 6382], and by the introduction of the electrolyte. An example of electrolyte was 1 M LiI plus 0.1 M I₂ dissolved in γ-butyrolactone.

The schematics and operation principle of the cell are shown in Figure 1. When the light penetrates through the glass 21 and the transparent conductive layer 22 of the anode electrode 20, it reaches the film 23 composed by the semiconductor layer, and it is absorbed by photosensitizer (or dye) 25 adsorbed on the surface of the TiO₂ crystal particles 24. The dye is excited and injects an electron into the TiO₂. Following this electron injection, the dye 25 is now oxidized. The electrons injected into the TiO₂ move through the TiO₂ film 23 and reach the transparent conductive layer 22. Then, the electrons reach the cathode electrode passing through the external circuit. In the cathode electrode, the reduction reaction of the redox mediator is produced at the interface between the Pt catalyst deposited on the transparent conductive layer 12 and the electrolyte 30. In that sense, the electrons reaching the cathode electrode 10 react with I₂ (present as I₃ species) in the electrolyte 30 and produced I⁻. The I species, which received electrons in the cathode electrode, move in the electrolyte 30, which is filling the pores 26 between the TiO₂ crystal particles 24, and reduce the dye 25 which was in the oxidized state. The cycle of the photo-electrochemical cell is then completed.

### Example 9: Results

### 1- Synthesis

The new synthesis route found to synthesize the new photosensitizers of this invention has the advantage to be able to obtain the halogen complexes avoiding the appearance of undesired by-products in the first step of the procedure, in particular, by-products such as solvent-coordinating complexes and bis-tridentate ligand complexes. The inventors replicated the synthesis route of the literature based on DMF for the complexes containing NCS or CN, and tried to stop at the step where the Cl complexes should be isolated. For the case of ruthenium, this is done by reacting and refluxing RuCl₃ and (H₃tcterpy) ligand in 1:1 ratio. After 4h of reflux, the NMR showed peaks at 2.58 and 3.1 ppm corresponding to methyl groups due to the presence of a complex with DMF as ligand. This was confirmed by infrared spectroscopy which showed bands at 2049 cm⁻¹ (assigned to ν(CN)) and 1970 cm⁻¹ (assigned to ν(CO)) corresponding to the coordinating DMF. These bands were absent when following the synthetic route of this invention. These infrared bands obtained in the DMF route remained even after a purification step by column chromatography. During such step, an additional impurity was detected, which was attributed to the complex Ru(H₃tcterpy)₂ by UV-visible spectroscopy. Therefore, with a variety of the literature synthesis route, a halogen containing complex could not be isolated with a sufficient purity necessary for an efficient photosensitizer.

### 2- Photo-electrochemical performances

2.1- The results in table 1 and figure 2 show a spectral response (IPCE) of photo-electrochemical cells with various photosensitizers.
The osmium complexes of this invention all show a spectral response of 25% to 50% at 900 nm, beating any known photosensitizer in such a wavelength region (see Figure 2). The integrated photo-current were between 13 and 20 mA/cm², competing or even being higher than the red dye. There is an important extension towards the near-infrared regions with an absorption band at 800-900nm with a significant absorption extinction coefficient of more than 1000 M⁻¹cm⁻¹, which was not reported before for such a kind of metal complexes.

**Table 1: Comparison of photosensitizers by the absorption band in the red-NIR region and the spectral response at 900 nm of photo-electrochemical cells made with complex of the osmium metal**

| set | photosensitizer | absorption band in the red-NIR region | spectral response at 900nm |
|---|---|---|---|
| | | [nm] | [%] |
| this invention | [Os(H₃tcterpy)(bpyq)Cl] ex. 1 | 830 | 50 |
| | [Os(H₃tcterpy)(H₂dcbpy)Cl] ex. 2 | 820 | 50 |
| | [Os(H₃tcterpy)(bpy)Cl] ex. 4 | 880 | 30 |
| | [Os(H₃tcterpy)(dmbpy)Cl] ex. 3 | 880 | 30 |
| | [Os(H₃tcterpy)(tbbpy)Cl] ex. 5 | 870 | 25 |
| others | [Os(H₃tcterpy)(NCS)₃] | 710 | 0 |
| | [O_{S}(H₃tcterpy)₂ | 680 | 0 |
| | [Os(H₃tcterpy)(dmbpy)(CN)] | 700 | 0 |
| | [Ru(H₂dcbpy)₂(NCS)₂], red dye | 530 | 0 |
| | [Ru(H₃tcterpy)(NCS)₃], black dye | 610 | <10 |

2.2- The ruthenium complexes of this invention show a wide spectral response extended up to more than 800nm, and superior to that of red dye with an integrated photo-current higher than 16 mA/cm². This is the first time to obtain such a high spectral response with a ruthenium complex which does not contain any CN or SCN ligand (see Figure 3), with an increased dye stability. The stability of the dye oxidized state was confirmed by the appearance of reversible cyclic voltammograms obtained with dye solutions in coordinating solvents such as methanol.

**Table 2: Comparison of Ru photosensitizers by the absorption band in the red region and the spectral response at 750 nm of photo-electrochemical cells made with such molecules**

| set | photosensitizer | absorption band in the red region | spectral response at 750 nm |
|---|---|---|---|
| | | [nm] | [%] |
| this invention | [Ru(H₃tcterpy)(bpyq)Cl] ex.6 | 675 | 55 |
| | [Ru(H₃tcterpy)(tbbpy)Cl] ex. 7 | 670 | 55 |
| others | [Ru(H₂dcbpy)₂(NCS)₂], red dye | 530 | 20 |
| | [Ru(H₃tcterpy)(NCS)₃], black dye | 610 | 60 |

## Claims

1. A photosensitizer metal complex of the formula MLYX, in which :
- M is ruthenium or osmium,
- Y is a tridentate ligand of the type 2,2':6',2"-terpyridyl derivative substituted in the 4,4',4" positions, by only one anchoring group, said anchoring group being an acid group present in the acidic form or anionic form balanced by a cation, preferably carboxylic, phosphonic or boronic group,
- L is a substituted or unsubstituted bidentate ligand of the type 2-(2'-pyridyl)-quinoline or of the type 2,2'-bipyridyl, preferably substituted in the 4,4' positions by a carboxylic group present as acid or as anion balanced with a cation, or a C₁₋₃₀ alkyl group, and
- X is a halogen, preferably Cl or 1.

2. A photosensitizer metal complex according to claim 1 having the formula Ia, 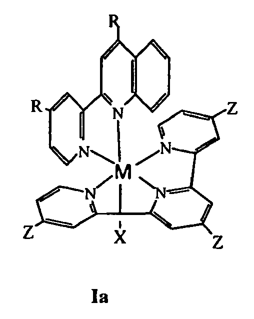 in which :
- M is ruthenium or osmium,
- Z is the said anchoring group such as carboxylic, phosphonic or boronic, present in the acidic form or anionic form balanced by a cation,
- R is H, a carboxylic group as acid or as anion balanced with a cation or a C₁₋₃₀ alkyl group, and
- X is a halogen preferably Cl or 1.

3. A photosensitizer metal complex of the formula Ib, 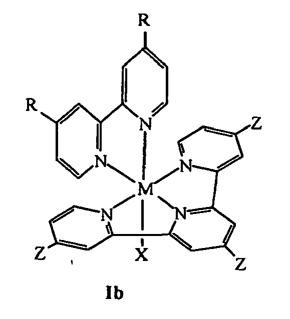 in which :
- M is ruthenium or osmium,
- Z is the said anchoring group such as carboxylic, phosphonic or boronic, present in the acidic form or anionic form balanced by a cation,
- R is H, a carboxylic group as acid or as anion balanced with a cation or a C₁₋₃₀ alkyl group, and
- X is a halogen preferably Cl or I.

4. A photosensitizer metal complex according to anyone of claims 1 to 3, **characterized in that** Z is the carboxylic group, present in the acidic form or anionic form balanced by a cation.

5. A photosensitizer metal complex of the formula Ib, according to claims 1 or 3, **characterized in that** R is the carboxylic group, present in the acidic form or anionic form balanced by a cation.

6. A photosensitizer metal complex according to anyone of claims 1 to 5, **characterized in that** X is Cl.

7. A photosensitizers according to anyone of claims 1 to 6, where in M is osmium.

8. A photosensitizers according to anyone of claims 1 to 6, where in M is ruthenium.

9. A synthesis process to obtain the photosensitizers according to anyone of claims 1 to 8, comprising the following steps :
1°) reacting a metal M precursor, such as (TBA)₂Os(Cl)₆ or Ru(Cl)₃ , with a stoichiometric amount of the tridentate ligand L to form the corresponding MLCl₃ complex, using a high boiling point non-coordinating solvent preferably an alcohol such as n-butanol; and
2°) reacting the MLCl₃ complex with a bidentate Y ligand, and
3°) if necessary, substituting by thermal substitution reaction the chloride from the MLYCl complex by another halogen.

10. A photo-electrochemical cell, comprising an anode electrode (20) having a film (23) of metal oxide semiconductor particles which has been deposited and sintered on a transparent substrate, a photosensitizer (25) that is adsorbed on the surface of said metal oxide particles, a cathode electrode (10), and an electrolyte (30) that is filling the space between the said anode electrode and cathode electrode, **characterized in that** the photosensitizer is one specified in anyone of claims 1 to 8.

## Patentansprüche

1. Fotosensibilisatormetallkomplex mit der Formel MLYX, in welchem
- M Ruthenium oder Osmium ist,
- Y ein dreizähliger Ligand von der Art eines 2,2':6'2"-Terpyridylderivats ist, der in den Positionen 4, 4', 4" durch nur eine Verankerungsgruppe substituiert ist, wobei die Verankerungsgruppe eine Säuregruppe ist, die in saurer Form oder in mit einem Kation ausgeglichener anionischer Form vorliegt, vorzugsweise eine Carboxyl-, Phosphon- oder Borongruppe ist,
- L ein substituierter oder unsubstituierter zweizähliger Ligand von der Art eines 2-(2'-Pyridyl)-Chinolins oder von der Art eines 2,2'-Bipyridyls ist, der vorzugsweise in den Positionen 4, 4' durch eine Carboxylgruppe substituiert ist, die als Säure oder als mit einem Kation ausgeglichenes Anion oder als C₁₋₃₀-Alkylgruppe vorhanden ist, und
- X an Halogen und vorzugsweise Cl oder I ist.

2. Fotosensibilisatormetallkomplex nach Anspruch 1 mit der Formel la, 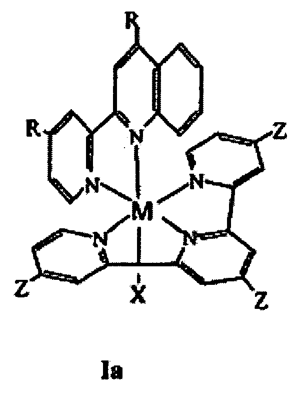 in welchem
- M Ruthenium oder Osmium ist,
- Z die Verankerungsgruppe ist, beispielsweise eine Carboxyl-, Phosphon- oder Borongruppe, die in saurer Form oder mit einem Kation ausgeglichener anionischer Form vorhanden ist,
- R H, eine Carboxylgruppe als Säure oder als mit einem Kation ausgeglichenes Anion oder eine C₁₋₃₀-Alkylgruppe ist, und
- X an Halogen und vorzugsweise Cl oder I ist.

3. Fotosensibilisatormetallkomplex mit der Formel Ib, 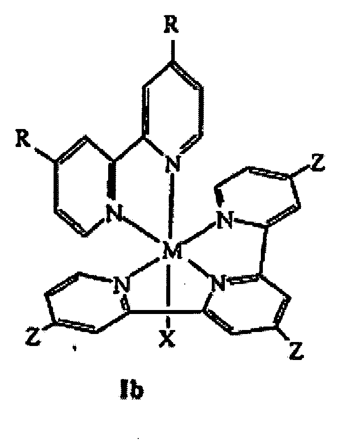 in welchem
- M Ruthenium oder Osmium ist,
- Z die Verankerungsgruppe ist, beispielsweise eine Carboxyl-, Phosphon- oder Borongruppe, die in saurer Form oder mit einem Kation ausgeglichener anionischer Form vorhanden ist,
- R H, eine Carboxylgruppe als Säure oder als mit einem Kation ausgeglichenes Anion oder eine C₁₋₃₀-Alkylgruppe ist, und
- X an Halogen und vorzugsweise Cl oder I ist.

4. Fotosensibilisatormetallkomplex nach einem der Ansprüche 1 bis 3, **dadurch gekennzeichnet, daß** Z die Carboxylgruppe ist, die in azidischer Form oder mit einem Kation ausgeglichener anionischer Form vorhanden ist.

5. Fotosensibilisatormetallkomplex mit der Formel Ib nach den Ansprüchen 1 bis 3, **dadurch gekennzeichnet, daß** R die Carboxylgruppe ist, die in saurer Form oder mit einem Kation ausgeglichener anionischer Form vorhanden ist.

6. Fotosensibilisatormetallkomplex nach einem der Ansprüche 1 bis 5, **dadurch gekennzeichnet, daß** X Cl ist.

7. Fotosensibilisatormetallkomplex nach einem der Ansprüche 1 bis 6, wobei M Osmium ist.

8. Fotosensibilisatormetallkomplex nach einem der Ansprüche 1 bis 6, wobei M Ruthenium ist.

9. Syntheseverfahren zum Erhalt der Fotosensibilisatoren nach einem der Ansprüche 1 bis 8, mit den folgenden Schritten:
1. Reaktion eines Vorläufers des Metalls M, beispielsweise (TBA)₂Os(Cl)₆ oder Ru(Cl)₃, mit einer stöchiometrischen Menge des dreizähligen Liganden L zur Ausbildung des entsprechenden MLCl₃-Komplexes unter Verwendung eines nichtkoordinerenden Lösungsmittels mit hohem Siedepunkt, vorzugsweise eines Alkohols, beispielsweise n-Butanol; und
2. Reaktion des MLCL₃-Komplexes mit einem zweizähligen Liganden Y, und
3. Bei Bedarf Substituierung des Chlorids aus dem MLYCI-Komplex durch ein anderes Halogen mittels einer thermischen Substituierungsreaktion.

10. Fotoelektrochemische Zelle, mit einer Anodenelektrode (20) mit einer Schicht (23) von aus Metalloxid bestehenden Halbleiterteilchen, die auf ein durchsichtiges Substrat abgeschieden und aufgesintert wurde, einem Fotosensibilisator (25), der auf der Oberfläche der Metalloxidteilchen adsorbiert wurde, einer Kathodenelektrode (10) und einem Elektrolyten (30), der den Raum zwischen der Anodenelektrode und der Kathodenelektrode ausfüllt, **dadurch gekennzeichnet, daß** der Fotosensibilisator ein solcher ist, wie er in einem der Ansprüche 1 bis 8 beschrieben wurde.

## Revendications

1. Complexe métallique photosensibilisateur de formule MLYX, dans laquelle :
- M est le ruthénium ou osmium,
- Y est un ligand tridenté du type dérivé de 2,2':6',2"- terpyridyl substitué aux positions 4,4',4", par seulement un groupe d'ancrage, ledit groupe d'ancrage étant un groupe acide présent sous forme acide ou forme anionique équilibrée par un cation, de préférence un groupe carboxylique, phosphonique ou boronique,
- L est un ligand bidenté substitué ou non substitué du type 2-(2'-pyridyl)-quinoléine ou du type 2,2'-bipyridyl, de préférence substitué aux positions 4,4' par un groupe carboxylique présent comme acide ou comme anion équilibré avec un cation, ou un groupe alkyl C₁₋₃₀, et
- X est un halogène, de préférence Cl ou I.

2. Complexe métallique photosensibilisateur selon la revendication 1, ayant la formule Ia, 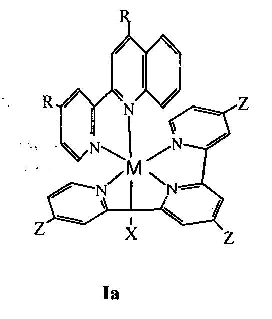 dans laquelle :
- M est le ruthénium ou osmium,
- Z est un groupe d'ancrage tel que carboxylique, phosphonique or boronique, présent dans la forme acide ou forme anionique équilibrée par un cation,
- R est H, un groupe carboxylique comme acide ou anion équilibré avec un cation ou un groupe alkyl C₁₋₃₀, et
- X est un halogène, de préférence Cl or 1.

3. Complexe métallique photosensibilisateur de formule Ib, dans laquelle : 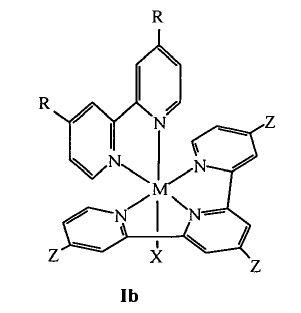
- M est du ruthénium ou osmium,
- Z est un groupe d'ancrage tel que carboxylique, phosphonique or boronique, présent dans la forme acide ou forme anionique équilibrée par un cation,
- R est H, un groupe carboxylique comme acide ou anion équilibré avec un cation ou un groupe alkyl C₁₋₃₀, et
- X est un halogène, de préférence Cl or I.

4. Complexe métallique photosensibilisateur selon l'une des revendications 1 à 3, **caractérisé en ce que** Z est le groupe carboxylique group, présent dans la forme acide ou forme anionique équilibrée par un cation.

5. Complexe métallique photosensibilisateur de formule Ib, selon l'une des revendication 1 ou 3, **caractérisé en ce que** R est un groupe carboxylique, présent dans la forme acide ou anionique équilibrée par un cation.

6. Complexe métallique photosensibilisateur selon l'une des revendications 1 à 5, **caractérisé en ce que** X est Cl.

7. Complexe métallique photosensibilisateur selon l'une des revendications 1 à 6, dans lequel M est l'osmium.

8. Complexe métallique photosensibilisateur selon l'une des revendications 1 à 6, dans lequel M est le ruthénium.

9. Procédé de synthèse pour obtenir des photosensibilisateurs selon l'une des revendications 1 à 8, comprenant les étapes suivantes de :
1°) réaction d'un précurseur de métal M, tel que (TBA)₂Os(Cl)₆ ou Ru(Cl)₃ , avec une quantité stoechiometrique de ligand tridenté L pour former le complexe correspondant MLCl₃ en utilisant un solvant non coordinant de haut point d'ébullition, de préférence un alcool tel que le n-butanol; et
2°) réaction du complexe MLCl₃ avec un ligand bidenté Y, et
3°) si nécessaire, substitution par réaction de substitution thermique du chlorure du complexe MLYCl par un autre halogène.

10. Cellule photo-électrochimique, comprenant une électrode anode (20) ayant un film (23) de particules semi-conducteur d'oxyde métallique qui a été déposé et fritté sur un substrat transparent, un photosensibilisateur (25) qui est adsorbé sur la surface desdites particules d'oxyde métallique, une électrode cathode (10), et un électrolyte (30) qui remplit l'espace entre ladite électrode anode et électrode cathode, **caractérisé en ce que** le photosensibilisateur est spécifié dans l'une des revendications 1 à 8.
